(19) Europäisches Patentamt
European Patent Office
Office européen des brevets

(11) Veröffentlichungsnummer: **0 032 248**
**B1**

(12) # EUROPÄISCHE PATENTSCHRIFT

(45) Veröffentlichungstag der Patentschrift: **18.08.82**

(51) Int. Cl.³: **C 02 F 1/72**, C 01 C 3/14, B 01 J 27/02

(21) Anmeldenummer: **80108250.4**

(22) Anmeldetag: **30.12.80**

(54) **Verfahren zur Entgiftung von cyanidhaltigen Abwässern und Reaktionslösungen.**

(30) Priorität: **09.01.80 DE 3000563**

(43) Veröffentlichungstag der Anmeldung: **22.07.81 Patentblatt 81/29**

(45) Bekanntmachung des Hinweises auf die Patenterteilung: **18.08.82 Patentblatt 82/33**

(84) Benannte Vertragsstaaten: **BE DE FR GB IT NL**

(56) Entgegenhaltungen:

**DE-C-358 194**
**US-A-2 194 438**

**CHEMICAL ABSTRACTS, Band 79, Nr. 22, 3. Dezember 1973, Seite 161, Nr. 128942g Columbus, Ohio, U.S.A.**

(73) Patentinhaber: **BASF Aktiengesellschaft, Carl-Bosch-Strasse 38, D-6700 Ludwigshafen (DE)**

(72) Erfinder: **Richter, Konrad, Dr. Chem., Amsterdamer Strasse 14, D-6700 Ludwigshafen (DE)**
Erfinder: **Goetze, Walter, Dr. Chem., Duerkheimer Strasse 13, D-6701 Dannstadt-Schauernheim 1 (DE)**
Erfinder: **Muehlpfordt, Werner, Dr. Chem., Wartenbergstrasse 20, D-6701 Ellerstadt (DE)**
Erfinder: **Reichel, Fritz, Dr. Chem., Holunderweg 3, D-6945 Hirschberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Entgiftung von cyanidhaltigen Abwässern und Reaktionslösungen

Vorliegende Erfindung betrifft ein Verfahren zur Entfernung von Cyaniden aus Reaktionslösungen und Abwässern.

Cyanide sind als hochtoxische, vor allem wassergefährdende Verbindungen bekannt. Es hat deshalb nicht an Versuchen gefehlt, cyanidhaltige Reaktionslösungen und Abwässer wirtschaftlich zu entgiften.

Eine gebräuchliche Methode benutzt die Umwandlung der freien Cyanide in komplexe Eisenverbindungen und deren Abscheidung als Berliner Blau oder Berliner Weiss, die als verhältnismässig wenig giftige Produkte auf Deponien abgelagert werden. Nachteile dieses Verfahrens sind die Handhabung erheblicher Schlammvolumina und die hohen Kosten für Lagerung und Deponierung der Schlämme. Ferner ist auch der Einfluss verschiedener Oxidationsmittel auf die deponierten Produkte umstritten.

Andere Verfahren basieren auf der Behandlung mit Formaldehyd (DE-A 21 19 119), bei denen das Cyanid in Glyconitril übergeführt wird:

$$HCN + H_2CO \longrightarrow HOCH_2\text{-}CN \quad \text{bzw.}$$
$$CN^- + H_2O + H_2CO \longrightarrow HOCH_2\text{-}CN + OH^-$$

Das gebildete Glyconitril wird verseift und die dabei anfallenden Verseifungsprodukte, Glykolsäure und Ammoniak, gegebenenfalls isoliert. Da die Verseifungsreaktion bei niederen Temperaturen recht langsam abläuft, muss sie durch Temperaturerhöhung beschleunigt werden, was einen erheblichen Aufwand an Energie bedeutet.

Das gebräuchlichste Verfahren zur Zerstörung von Cyaniden ist die Oxidation mit Hypochlorit bzw. mit Chlor im alkalischen Milieu. Hierbei wird das gelöste Cyanid bekanntlich zunächst in Chlorcyan übergeführt,

$$CN^- + OCl^- + H_2O \longrightarrow ClCN + 2\,OH^-,$$

das anschliessend wegen seiner hohen Toxizität in einem weiteren Reaktionsschritt verseift werden muss:

$$ClCN + 2\,OH^- \longrightarrow OCN^- + H_2O + Cl^-.$$

Hierfür wird ein pH-Wert $> 11$ als Voraussetzung angesehen, um die Hydrolysegeschwindigkeit des Chlorcyans genügend gross zu halten. Ein wesentlicher Nachteil dieses Verfahrens besteht in der Gefahr der Chlorcyanentwicklung bei Absinken des pH-Wertes unter 11. Ausserdem tritt sowohl durch das Hypochlorit selbst ($Cl_2 + 2\,NaOH \rightarrow NaOCl + NaCl + H_2O$) als auch durch die hohe pH-Werteinstellung der zu entgiftenden Lösungen bei der Rückneutralisation eine starke Aufsalzung der zu entgiftenden Lösungen ein. Bei Gegenwart von organischen Verbindungen in den zu behandelnden Abwässern können zudem Chlorierungsprodukte gebildet werden, die mitunter Schwierigkeiten bei der weiteren Aufarbeitung verursachen.

Es fehlte deshalb nicht an Versuchen, das Hypochlorit durch geeignete andere Oxidationsmittel, wie Wasserstoffperoxid, Permanganat, Ozon, Perschwefelsäure und Peroxodisulfate, zu ersetzen. Auch die mit Holzkohle oder Vanadiumoxyd katalysierte sowie die anodische Oxidation an verschiedenen Metallelektroden wurde beschrieben. Daneben ist aber auch die Umsetzung zu Rhodaniden mittels Polysulfiden beschrieben worden (DE-A 23 07 669). Obwohl diese letztgenannte Reaktion schon bei Temperaturen zwischen 20°C und 40°C abläuft, besitzt sie doch einige gravierende Nachteile.

So muss wegen der möglichen Geruchsbelästigung durch $H_2S$ bei relativ hohen pH-Werten gearbeitet werden. Um eine möglichst rasche Umsetzung zu gewährleisten, muss der Schwefel in ca. 4-8fachen molarem Überschuss angewendet werden und es muss das restliche Polysulfid durch Zusatz von Schwermetallsalzen, vorzugsweise Eisensulfat, ausgefällt und abgetrennt werden, was wegen der grossen Mengen nachteilig ist.

Unter den anderen Verfahren fand vor allem die Oxidation mit Wasserstoffperoxid gemäss

$$CN^- + H_2O_2 \longrightarrow OCN^- + H_2O$$

Beachtung, da mit seiner Verwendung eine Reihe von Vorteilen verknüpft sind:

- Das Cyanid wird direkt zum Cyanat oxidiert, d.h. es bilden sich keine toxischen Zwischenprodukte.
- Die Reaktion ist in geringerem Masse vom pH-Wert der Lösung abhängig als die Verseifung des Chlorcyans. Dadurch werden weniger Alkali und Säure zur Rückneutralisierung benötigt.
- Das Oxidationsmittel trägt selbst nicht zur Aufsalzung der behandelten Lösungen bei, da als Reaktionsprodukt nur Wasser entsteht.

Nachteilig ist jedoch, dass die Reaktion wegen der geringen Aktivität des Wasserstoffperoxids bei Raumtemperatur nur sehr langsam verläuft. Es wurde deshalb versucht, sie durch Verwendung verschiedener Katalysatorsysteme zu beschleunigen. So wird in der US-Patentschrift 3 617 567 die Verwendung von löslichen Silber-, Vanadium-, Wolfram- und Kupfersalzen als Katalysatoren beschrieben. Das Verfahren erfordert jedoch die Anwendung erhöhter Temperaturen und führt besonders bei konzentrierten Cyanidlösungen zu nicht befriedigenden Ergebnissen, abgesehen davon, dass die von Cyanid befreiten Abwässer nunmehr mit Schwermetallsalzen beladen sind und ebenfalls nicht ohne weiteres verworfen werden können. Die DE-A 23 52 856 beschreibt die Verwendung von J-Ionen oder freiem Jod, gegebenenfalls in Kombination mit Silberionen. Dieses Verfahren erfordert ebenfalls erhöhte Temperaturen, der optimale pH-Bereich liegt zwischen 9 und 11. Ohne die Verwendung von Schwermetallsalzen arbeitet ein in der DE-A 22 19 645 angegebenes Verfahren, das den Zusatz von wasserlöslichen Alkalisilikaten beschreibt. Es ist jedoch auf hohe Cyanidmengen beschränkt und arbeitet bei pH-Werten > 11, was wiederum eine hohe Aufsalzung des Abwassers bewirkt.

Der vorliegenden Erfindung lag die Aufgabe zugrunde, ein Verfahren zur Entgiftung von cyanidhaltigen Abwässern oder Reaktionslösungen durch Umsetzung mit Wasserstoffperoxid oder Verbindungen, die Wasserstoffperoxid abspalten, bereitszustellen, das schon bei Raumtemperatur durchgeführt werden kann.

Es wurde gefunden, dass diese Aufgabe dadurch gelöst werden kann, dass man die Umsetzung in Gegenwart von Schwefel oder von Verbindungen, die mit dem Wasserstoffperoxid oder den Wasserstoffperoxid abspaltenden Verbindungen unter Bildung von Schwefel reagieren, durchführt.

Bei dem erfindungsgemässen Verfahren lassen sich die Cyanide ohne Bildung toxischer Zwischenprodukte in ungiftige Verbindungen überführen. Die Abreicherung des Cyanides unter alleiniger Verwendung von Wasserstoffperoxid oder Wasserstoffperoxid abspaltender Verbindungen verläuft wie bereits erwähnt sehr langsam. Überraschenderweise wird jedoch die Umsetzung in Gegenwart von Schwefel oder einer Verbindung, die mit Wasserstoffperoxid unter Bildung von Schwefel reagiert, ganz erheblich beschleunigt.

Dieser Effekt tritt schon bei der Verwendung von elementarem Schwefel ein, wird aber besonders deutlich bei Verwendung von schwefelhaltigen Verbindungen, die mit Wasserstoffperoxid unter Schwefelabscheidung reagieren. Als solche Verbindungen kommen beispielsweise in Betracht: Rhodanide, Thioester, Thioamide, Polysulfanmonosulfate, Polysulfandisulfonate, besonders bevorzugt aber Salze der Thioschwefelsäure, Polysulfide und Sulfide, wobei insbesondere die Alkali- und Erdalkaliverbindungen hervorzuheben sind. Die genannten Verbindungen werden beispielsweise in solchen Mengen eingesetzt, dass die Summe des in ihnen enthaltenen und des durch die Oxidation mit Peroxiden sich bildenden elementaren Schwefels 10 bis 120 Mol-%, bezogen auf Cyanid, beträgt. Vorzugsweise beträgt die Menge 20 bis 50 Mol-%. Schwefel, der ausschiesslich in elementarer Form vorliegt, wird ebenfalls in Mengen von 10 bis 120 Mol-%, vorzugsweise in Mengen von 20 bis 50 Mol-%, jeweils bezogen auf das Cyanid, eingesetzt. Je nach der Menge des eingesetzten Schwefels bzw. der Schwefel abgebenden Verbindung variiert das in dem behandelten Abwasser entstandene Reaktionsprodukt. Wird die Schwefel abgebende Verbindung bezüglich des Cyanides in molarem Überschuss eingesetzt, d.h. stehen je Mol Cyanid mehr als 1 Mol elementaren Schwefels zur Verfügung, so findet man als Reaktionsprodukt hauptsächlich Rhodanid. Setzt man jedoch die Schwefel abgebende Verbindung in geringen Mengen von z.B. 50 Mol-%, bezogen auf Cyanid, ein, d.h. dass dann das $CN^-$ : S-Verhältnis 1 : 0,5 beträgt, so werden bei Einsatz dieser katalytisch wirkenden Mengen als Reaktionsprodukte hauptsächlich Cyanate bzw. deren Hydrolyseprodukte Ammoniak und Bicarbonat nachgewiesen.

Als oxidierende Komponente werden Wasserstoffperoxid und/oder Wasserstoffperoxid abgebende Verbindungen wie Perschwefelsäure, Salze der Peroxodischwefelsäure, Alkali- und Erdalkaliperoxide, Perborate, Percarbonate sowie aber auch organische Peroxide verwendet. Zweckmässigerweise verwendet man jedoch Wasserstoffperoxid sowie als Verbindungen, die Wasserstoffperoxid abspalten können, Perborate, Perschwefelsäure, Percarbonate, Alkali- und Erdalkaliperoxide.

Das Oxidationsmittel wird in Mengen von $\geqq$ 100 Mol-%, vorzugsweise von 110 bis 130 Mol-%, bezogen auf das zu entfernende Cyanid, eingesetzt. Aus wirtschaftlichen Gründen wird man Mengen von über 200 Mol-% im allgemeinen nicht überschreiten.

Ein grosser Vorteil des erfindungsgemässen Verfahrens gegenüber den bisher bekannten Verfahren liegt darin, dass es im pH-Bereich von 5 bis 12 angewandt werden kann, wobei jedoch bei Anwendung von pH-Werten > 10 wegen des Einsetzens der Bildung flüchtiger Blausäure in geschlossenen Apparaturen gearbeitet werden muss. Vorzugsweise arbeitet man jedoch im Hinblick auf eine möglichst geringe Salzfracht im behandelten Abwasser im pH-Bereich zwischen 7 und 10.

Das erfindungsgemässe Verfahren hat den grossen Vorteil, dass die Entgiftung cyanidhaltiger Abwässer bereits bei sehr tiefen Temperaturen von z.B. < 50°C ausserordentlich rasch gelingt. Dies bedeutet, dass man Abwässer, die häufig mit Temperaturen von 15 bis 35°C anfallen, ohne zusätzliches Erwärmen in technisch sehr befriedigenden kurzen Reaktionszeiten entgiften und somit die bei anderen Verfahren häufig erforderliche Erwärmung eingespart werden kann. Selbstverständlich wird aber auch beim erfindungsgemässen Verfahren die Reaktionsgeschwnidigkeit durch Temperaturerhöhung gesteigert, man wird jedoch im allgemeinen die Umsetzung aus den genannten Gründen nicht bei Temperaturen oberhalb 90°C durchführen.

Es gelingt mit Hilfe des erfindungsgemässen Verfahrens, $CN^-$-haltige Abwässer und Reaktionslösungen unter äusserst milden Bedingungen zu entgiften, und die Aufsalzung der behandelten Reaktionslösungen und Abwässer auf ein Minimum zu beschränken. Neben diesem, vor allem aus Gründen des Umweltschutzes, wichtigen Effekt bietet die Anwendung des neuen Verfahrens auch wesentliche wirtschaftliche Vorteile, da die schwefelabgebenden Verbindungen wohlfeile Verbindungen darstellen und wegen der geringen Einsatzmengen kostenmässig praktisch nicht ins Gewicht fallen.

Die folgenden Beispiele erläutern die Wirksamkeit des Verfahrens.

Beispiel 1

In einer Lösung von 6,25 g Natriumcyanid und 40 g Natriumbicarbonat in 2 l Wasser werden nach Einstellung eines pH-Wertes von 8 mit konzentrierter Schwefelsäure und Erwärmen auf 26°C 0-100 Mol-%, bezogen auf Natriumcyanid, festes Natriumthiosulfat ($Na_2S_2O_3 . 5\,H_2O$) aufgelöst. Anschliessend wird die Entgiftungsreaktion durch Zugabe von 17,5 ml 30 gew.%igem Wasserstoffperoxid gestartet. Nach verschiedenen Zeiten werden Proben entnommen und die Entgiftungsreaktion durch Zugabe von überschüssigem Natriumsulfit — noch vorhandenes Wasserstoffperoxid wird dadurch augenblicklich vernichtet — abgebrochen. Die $CN^-$-Konzentration der Proben wird wie üblich mit Hilfe einer $CN^-$-sensitiven Elektrode bestimmt.

TABELLE 1

| Vers.-Nr. | $H_2O_2$ Mol-% bezogen auf $CN^-$ | $Na_2S_2O_3 . 5H_2O$ Mol-% bezogen auf $CN^-$ | $\frac{CN^-_t}{CN^-_o}$ x 100% t=0,5h | 1h | 2h | 3h |
|---|---|---|---|---|---|---|
| 1 | 120 | — | 100 | 95 | 81 | 74 |
| 2 | 120 | 20 | 9 | 0,9 | 0,1 | — |
| 3 | 120 | 100 | 1,5 | 0,1 | 0,01 | — |
| 4 | — | 100 | 100 | 100 | 100 | 99 |
| 5 | 120 | 5mgKJ + 1gAg$^+$/l | 89 | 81 | 79 | 72 |

Während die Behandlung mit $Na_2S_2O_3 . 5\,H_2O$ alleine (Versuch 4) keinerlei Effekt zeigt und auch die Zugabe von $H_2O_2$ alleine (Versuch 1) nur wenig wirksam ist, findet man bei kombinierter Anwendung beider Reagenzien einen raschen Abfall der $CN^-$-Konzentration. Der Entgiftungserfolg ist sowohl bei Verwendung von 100 Mol-% $Na_2S_2O_3 . 5\,H_2O$, als auch bei Anwendung von 20 Mol-% $Na_2S_2O_3 . 5\,H_2O$, bezogen auf Cyanverbindung, wesentlich grösser als bei Verwendung gleicher Mengen von Wasserstoffperoxid in Gegenwart von katalytischen Mengen von Jod- und Silberionen gemäss der DE-A 23 52 856 (Versuch 5).

Beispiel 2

In einer Lösung von 4,9 g Natriumcyanid und 8,4 g Natriumcarbonat in 2 l Wasser werden nach Einstellung eines pH-Wertes von 8,5 mit Schwefelsäure bei einer Temperatur von 20°C 0 bzw. 10 bzw. 100 Mol-% festes Natriumthiosulfat ($Na_2S_2O_3 . 5\,H_2O$), bezogen auf Natriumcyanid, aufgelöst. Anschliessend wird die Entgiftungsreaktion durch Zugabe eines handelsüblichen 30 gew.%igen Wasserstoffperoxides, entsprechend 100 bis 175 Mol-%, bezogen auf eingesetztes Natriumcyanid, gestartet.

Der Reaktionsablauf wurde, wie in Beispiel 1 beschrieben, verfolgt. Die nach 1 Stunde gefundenen Restcyanidgehalte sind in Tabelle 2 zusammengestellt.

TABELLE 2

| Vers.-Nr. | $H_2O_2$ Mol-% bezogen auf $CN^-$ | $Na_2S_2O_3 . 5H_2O$ Mol-% bezogen auf $CN^-$ | $\frac{CN^-1h}{CN^-_o}$ x 100% |
|---|---|---|---|
| 6 | 100 | 100 | 11 |
| 7 | 125 | 100 | 3 |
| 8 | 150 | 100 | 1 |
| 9 | 175 | 100 | 0,6 |
| 13 | 175 | 10 | 36 |
| 14 | 175 | — | 96 |

Durch steigende $H_2O_2$-Mengen wird die Entgiftungsreaktion zunehmend beschleunigt. Bei Verwendung von 100 Mol-% $Na_2S_2O_3 . 5 H_2O$, bezogen auf eingesetzte Cyanverbindung, lässt sich ein äusserst rascher Entgiftungserfolg feststellen. Bei Einwirkung von nur 10 Mol-% $Na_2S_2O_3 . 5 H_2O$, bezogen auf NaCN, wird die Oxidation des Cyanids durch $H_2O_2$ ebenfalls noch sehr stark beschleunigt.

Beispiel 3

In einer Lösung von 6,25 g Natriumcyanid und 0 bzw. 6,3 g ($Na_2S_2O_3 . 5 H_2O$), entsprechend 0 bzw. 20 Mol-%, bezogen auf Natriumcyanid, in 2 l Wasser werden 32 g Zitronensäure + 14 g Natriumhydroxid bzw. 40 g Natriumbicarbonat bzw. 50 g Natriumcarbonat aufgelöst und mit Schwefelsäure bzw. Natronlauge ein pH-Wert von 5,5 bzw. 8,0 bzw. 11,0 eingestellt. Nach Erwärmen auf 26°C wird die Entgiftungsreaktion durch Zugabe von 17,5 ml, 120 Mol-%, bezogen auf Natriumcyanid, eines 30 gew.%igen Wasserstoffperoxides gestartet. Der Reaktionsablauf wird wie in Beispiel 1 beschrieben verfolgt. Die nach 1 Stunde gefundenen Restcyanidgehalte sind in Tabelle 3 angegeben.

TABELLE 3

| Vers.-Nr. | pH-Wert | $Na_2S_2O_3 . 5 H_2O$ Mol-% bezogen auf $CN^-$ | $\frac{CN^- 1h}{CN^-_0}$ x 100% |
|---|---|---|---|
| 15 | 5,5 | — | 99 |
| 16 | 5,5 | 20 | 77 |
| 1 | 8,0 | — | 95 |
| 2 | 8,0 | 20 | 0,9 |
| 17 | 11,0 | — | 56 |
| 18 | 11,0 | 20 | 14 |

Obwohl die Entgiftungswirkung im schwach alkalischen pH-Bereich offensichtlich am besten ist, wird auch im leicht sauren und stark alkalischen Milieu die Vernichtung der $CN^-$-Ionen durch die Anwesenheit von Natriumthiosulfat stark beschleunigt.

Beispiel 4

Eine Lösung von 4,9 g Natriumcyanid, 8,4 g Natriumbicarbonat und 12,4 g Natriumthiosulfat ($Na_2S_2O_3 . 5 H_2O$), entsprechend 50 Mol-%, bezogen auf Natriumcyanid, in 2 l Wasser, wird mit Schwefelsäure auf einen pH-Wert von 8,5 eingestellt und auf die Temperatur von 20°C bzw. 35°C bzw. 50°C gebracht. Anschliessend wird die Entgiftungsreaktion durch Zugabe von 19,8 ml eines handelsüblichen 30 gew.%igen Wasserstoffperoxids, entsprechend 175 Mol-%, bezogen auf Natriumcyanid, gestartet. Der Reaktionsablauf wird wie in Beispiel 1 beschrieben verfolgt. Die nach 1 Stunde gefundenen Restcyanidgehalte sind in Tabelle 4 gezeigt.

TABELLE 4

| Vers.-Nr. | Temp. | $H_2O_2$ Mol-% bezogen auf $CN^-$ | $Na_2S_2O_3 . 5H_2O$ Mol-% bezogen auf $CN^-$ | $\frac{CN^- 1h}{CN^-_0}$ x 100% |
|---|---|---|---|---|
| 19 | 20 | 175 | 50 | 4,9 |
| 20 | 35 | 175 | 50 | 0,3 |
| 21 | 50 | 175 | 50 | 0,02 |

Durch Steigerung der Temperatur kann die Entgiftungsdauer stark verkürzt werden, jedoch ist auch bei Raumtemperatur schon ein sehr rascher Reaktionsverlauf zu beobachten.

Beispiel 5

In einer Lösung von 6,25 g Natriumcyanid und 40 g Natriumbicarbonat in 2 l Wasser werden nach Einstellung eines pH-Wertes von 8 mit

konzentrierter Schwefelsäure und Erwärmen auf 26°C 0 bzw. 6,3 g Natriumthiosulfat ($Na_2S_2O_3$ . 5 $H_2O$), entsprechend 20 Mol-%, bezogen auf Natriumcyanid, aufgelöst. Die Entgiftungsreaktion wird durch Zugabe von 17,5 ml 30 gew.%-igem Wasserstoffperoxid bzw. 12 g Natriumperoxid bzw. 23 g Natriumpercarbonat ($Na_2CO_4$ . 1,5 $H_2O$), d.h. jeweils entsprechend 120 Mol-%, bezogen auf Natriumcyanid, gestartet. Der Reaktionsverlauf wird wie in Beispiel 1 beschrieben verfolgt. Die nach 1 Stunde gefundenen Restcyanidgehalte finden sich in Tabelle 5.

TABELLE 5

| Vers.-Nr. | Oxidationsmittel jeweils 120 Mol-% bezogen auf $CN^-$ | $Na_2S_2O_3$ . 5 $H_2O$ Mol-%, bezogen auf $CN^-$ | $\frac{CN^- 1h}{CN^-_0}$ x 100% |
|---|---|---|---|
| 1 | $H_2O_2$ | — | 95 |
| 2 | $H_2O_2$ | 20 | 0,9 |
| 22 | $Na_2O_2$ | — | 58 |
| 23 | $Na_2O_2$ | 20 | 3,5 |
| 24 | $Na_2CO_4$ . 1,5 $H_2O$ | — | 68 |
| 25 | $Na_2CO_4$ . 1,5 $H_2O$ | 20 | 0,2 |

Aus Tabelle 5 geht hervor, dass mit $Na_2O_2$ und $Na_2CO_4$ . 1,5 $H_2O$ ebenfalls bei Anwesenheit von $Na_2S_2O_3$ . 5 $H_2O$ die $CN^-$-Konzentration sehr rasch abgesenkt wird. Ähnliche Entgiftungserfolge werden auch bei Verwendung von Perboraten, Erdalkaliperoxiden und Peroxidisulfaten erhalten.

Beispiel 6

In einer Lösung von 6,25 g Natriumcyanid und 40 g Natriumbicarbonat in 2 l Wasser werden nach Einstellung eines pH-Wertes von 8 mit konzentrierter Schwefelsäure und Erwärmen auf 26°C 6,3 g Natriumthiosulfat ($Na_2S_2O_3$ . 5 $H_2O$) bzw. 2,1 g Natriumrhodanid bzw. 1,9 g Thioharnstoff, entsprechend jeweils 20 Mol-%, bezogen auf Natriumcyanid, aufgelöst. Die Entgiftungsreaktion wird durch Zugabe von 17,5 ml 30 gew.%igem Wasserstoffperoxid, 120 Mol-%, bezogen auf Natriumcyanid, gestartet. Der Reaktionsverlauf wird wie in Beispiel 1 beschrieben verfolgt. Die nach 1 Stunde gefundenen Restcyanidgehalte zeigt Tabelle 6.

TABELLE 6

| Vers.-Nr. | Schwefelabgebende Verbindung Mol-% bezogen auf $CN^-$ | Oxidationsmittel jeweils 120 Mol-% bezogen auf $CN^-$ | $\frac{CN^- 1h}{CN^-_0}$ x 100% |
|---|---|---|---|
| 1 | — | $H_2O_2$ | 95 |
| 2 | 20 $Na_2S_2O_3$ . 5 $H_2O$ | $H_2O_2$ | 0,9 |
| 26 | 20 NaSCN | $H_2O_2$ | 27 |
| 27 | 20 $SC(NH_2)_2$ | $H_2O_2$ | 17,8 |

Obwohl mit $Na_2S_2O_3$ . 5 $H_2O$ die rascheste Reaktion beobachtet wird, beschleunigen auch andere Verbindungen, aus denen durch Oxidation aktiver Schwefel freigesetzt wird, die Entgiftungsreaktion äusserst stark. Eine, wenn auch geringere Reaktionsbeschleunigung wird auch beobachtet, wenn man als schwefelabgebende Verbindungen Polysulfandisulfonsäure, wie $Na_2S_4O_6$ oder Dithionat oder elementaren Schwefel oder Thioester verwendet.

Beispiel 7

In einer Lösung, die 4,9 g Natriumcyanid und 8,4 g Natriumbicarbonat in 2 l Wasser enthält, werden variierende Mengen von Natriumsulfid und Natriumpolysulfid gelöst. Bei einer Temperatur von 50°C werden zwischen 0 und 175 Mol-% 30 gew.%iges Wasserstoffperoxid zugegeben und die Cyanid-Abreicherung nach 30 Minuten bestimmt.

TABELLE 7

| Vers.-Nr. | S-abgebende Verbindung Mol-% CA auf $CN^-$ | $H_2O_2$ Mol-% bezogen auf $CN^-$ | $\frac{CN^- 0{,}5\ h}{CN^-_0} \times 100\%$ |
|---|---|---|---|
| 28 | 20 $Na_2S$ | 175 | 5,9 |
| 29 | 50 $Na_2S$ | 175 | 0,05 |
| 30 | 20 $Na_2S_2$ | 175 | 9,2 |
| 31 | 50 $Na_2S_2$ | 175 | 0,03 |
| 32 | 50 $Na_2S_2$ | 0 | 70,5 |
| 33 | 20 $Na_2S_5$ | 175 | 0,6 |
| 34 | 20 $Na_2S_5$ | 0 | 31,2 |

Aus der Tabelle ist zu ersehen (Versuche 31 und 32 sowie 33 und 34), dass die an sich bekannte Entgiftung cyanidhaltiger Abwässer mit Polysulfiden durch die kombinierte Anwendung mit Peroxiden erheblich beschleunigt wird.

Beispiel 8

2 l eines betrieblichen Abwassers mit einem Cyanidgehalt von 0,148% (gerechnet als NaCN) werden mit 15,3 g $NaHCO_3$ versetzt und mit NaOH auf pH = 8,5 eingestellt. Die Probe wird geteilt.

In der 1. Hälfte (Teil A) wurden 9,75 $Na_2S_2O_3 \cdot 5\,H_2O$ (= 50 Mol-% bez. auf NaCN) gelöst. Zur Entgiftung werden bei 50°C innerhalb einer Stunde 9 ml einer 20 gew.%igen $H_2O_2$-Lösung (= 175 Mol-% bezogen auf NaCN) unter Rühren kontinuierlich zugegeben.

Die 2. Hälfte (Teil B) wird ohne vorherige Zugabe von Natriumthiosulfat mit 9 ml einer 20 gew.%igen $H_2O_2$-Lösung versetzt und ebenfalls bei 50°C gerührt. Der Reaktionsverlauf wurde wie in Beispiel 1 beschrieben verfolgt.

TABELLE 8

| Versuchs-Nr. | $\frac{CN^-_t}{CN^-_0}$ 100% t=1h | 2h | 3h |
|---|---|---|---|
| 35 A | 8 | 98 | 96 |
| 35 B | 64 | 48 | 39 |

Das Beispiel zeigt, dass nach dem erfindungsgemässen Verfahren auch Abwässer, die in der betrieblichen Praxis anfallen, äusserst rasch und weitgehend entgiftet werden.

**Patentansprüche**

1. Verfahren zur Entgiftung von cyanidhaltigen Abwässern oder Reaktionslösungen durch Umsetzung mit Wasserstoffperoxid oder Verbindungen, die Wasserstoffperoxid abspalten, dadurch gekennzeichnet, dass man die Umsetzung in Gegenwart von Schwefel oder von Verbindungen, die mit dem Wasserstoffperoxid oder den Wasserstoffperoxid abspaltenden Verbindungen unter Bildung von Schwefel reagieren, durchführt.

2. Verfahren nach Anspruch 1, dadurch gekennzeichnet, dass man die Umsetzung bei Temperaturen von 5 bis 90°C durchführt.

3. Verfahren nach Ansprüchen 1 und 2, dadurch gekennzeichnet, dass man die Umsetzung bei Temperaturen von 15 bis 35°C durchführt.

4. Verfahren nach Ansprüchen 1 bis 3, dadurch gekennzeichnet, dass man die Umsetzung bei pH-Werten von 5 bis 12 durchführt.

5. Verfahren nach Ansprüchen 1 bis 4, dadurch gekennzeichnet, dass man die Umsetzung bei pH-Werten von 7 bis 10 durchführt.

6. Verfahren nach Ansprüchen 1 bis 5, dadurch gekennzeichnet, dass der Schwefel in Mengen von 10 bis 120 Mol-%, bezogen auf Cyanid, eingesetzt wird.

7. Verfahren nach Ansprüchen 1 bis 5, dadurch gekennzeichnet, dass die Schwefel abgebenden Verbindungen in solchen Mengen eingesetzt werden, dass die Summe des in den Abwässern oder Reaktionslösungen enthaltenen und des durch die Oxidation mit dem Wasserstoffperoxid sich bildenden elementaren Schwefels 10 bis 120 Mol-%, vorzugsweise 20 bis 50 Mol-%, bezogen auf Cyanid, beträgt.

8. Verfahren nach Ansprüchen 1 bis 7, dadurch gekennzeichnet, dass man als Schwefel abgebende Verbindungen Alkali- oder Erdalkalisalze der Thioschwefelsäure, und/oder Rhodanide und/oder Alkali- oder Erdalkalisulfide oder -polysulfide einsetzt.

**Revendications**

1. Procédé de détoxication d'eaux résiduaires et de solutions réactionelles contenant des cyanures par réaction avec le peroxyde d'hydrogène ou des composés libérant du peroxyde d'hydrogène, caractérisé en ce que cette réaction est effectuée en présence de soufre ou de composés réagissant avec le peroxyde d'hydrogène ou les composés libérant du peroxyde d'hydrogène en formant du soufre.

2. procédé suivant la revendication 1, caractérisé en ce que la réaction est effectuée à des températures de 5 à 90°C.

3. Procédé suivant les revendications 1 et 2, caractérisé en ce que la réaction est effectuée à des températures de 15 à 35°C.

4. Procédé suivant les revendications 1 à 3, caractérisé en ce que la réaction est effectuée à un pH de 5 à 12.

5. Procédé suivant les revendications 1 à 4, caractérisé en ce que la réaction est effectuée à un pH de 7 à 10.

6. Procédé suivant les revendications 1 à 5, caractérisé en ce que le soufre est utilisé en des proportions comprises entre 10 et 120% molaires par rapport au cyanure.

7. Procédé suivant les revendications 1 à 5, caractérisé en ce que les composés formant du soufre sont utilisés en des proportions telles que la somme du soufre contenu dans les eaux résiduaires ou dans la solution réactionnelle et due soufre élémentaire formé par l'oxydation par le peroxyde d'hydrogène se situe entre 10 et 120% et de préférence entre 20 et 50% molaires par rapport au cyanure.

8. Procédé suivant les revendications 1 à 7, caractérisé en ce que les composés formant du soufre sont choisis parmi les sels de métaux alcalins et alcalino-terreux de l'acide thio-sulfurique et(ou) les sulfocyanures et(ou) les sulfures et polysulfures de métaux alcalins et alcalino-terreux.

**Claims**

1. A process for the detoxification of cyanide-containing effluents or reaction solutions by reaction with hydrogen peroxide or compounds which eliminate hydrogen peroxide, characterized in that the reaction is carried out in the presence of sulphur or of compounds which react with hydrogen peroxide or the compounds eliminating hydrogen peroxide, with the formation of sulphur.

2. A process as claimed in claim 1, characterized in that the reaction is carried out at a temperature of from 5° to 90°C.

3. A process as claimed in claims 1 and 2, characterized in that the reaction is carried out a temperature of from 15° to 35°C.

4. A process as claimed in claims 1 to 3, characterized in that the reaction is carried out at a pH of from 5 to 12.

5. A process as claimed in claims 1 to 4, characterized in that the reaction is carried out at a pH of from 7 to 10.

6. A process as claimed in claims 1 to 5, characterized in that the sulphur is used in an amount of from 10 to 120 mole per cent, based on cyanide.

7. A process as claimed in claims 1 to 5, characterized in that the sulphur-giving compounds are used in such an amount that the sum of the elementary sulphur contained in the effluents or reaction solutions and of that formed by the oxidation with the hydrogen peroxide is from 10 to 120, preferably from 20 to 50, mole per cent, based on cyanide.

8. A process as claimed in claims 1 to 7, characterized in that alkali metal or alkaline earth metal salts of thiosulphuric acid and/or rhodanides and/or alkali metal or alkaline earth metal sulphides or polysulphides are used as sulphur-giving compounds.